# EUROPÄISCHE PATENTSCHRIFT

(11) **EP 1 792 710 B1**
(45) Veröffentlichungstag und Bekanntmachung des Hinweises auf die Patenterteilung: **23.06.2010**
(21) Anmeldenummer: 06019741.5
(22) Anmeldetag: 21.09.2006
(51) Int. Cl.: B29C 70/52

(54) **Verfahren zur Herstellung eines verstärkten Kunststoffprofils**
Method for manufacturing a reinforced plastic profile
Procédé de fabrication d'un profil en plastique renforcé

(30) Priorität: 30.11.2005 DE 102005057487; 13.09.2006 DE 102006042920
(43) Veröffentlichungstag der Anmeldung: 06.06.2007
(73) Patentinhaber: Thomas GmbH + Co. Technik + Innovation KG, 27432 Bremervörde (DE)
(72) Erfinder: Jansen, Klaus, Dr., 21614 Buxtehude (DE); Gensewich, Christian, 26954 Nordenham / Esenshamm (DE)
(74) Vertreter: Möller, Friedrich

(56) Entgegenhaltungen:
- EP-A2- 0 364 829
- WO-A-96/13378
- WO-A2-2005/062747
- DE-A1- 10 108 357
- US-A- 2 308 825
- US-A- 5 665 451
- US-A1- 2002 121 720

## Beschreibung

Die Erfindung betrifft ein Verfahren zur Herstellung eines verstärkten Kunststoffprofils gemäß dem Oberbegriff des Anspruchs 1.

Kunststoffprofile werden zur Verbesserung ihrer mechanischen Eigenschaften, insbesondere zur Erhöhung Ihrer Festigkeit, verstärkt. Im einfachsten Falle wird dazu eine Verstärkung vorgesehen. Sofern eine Verstärkung allein nicht ausreicht, wird eine zusätzliche Querverstärkung vorgesehen.

Es ist bekannt, Verstärkungen bzw. Querverstärkungen aus vorkonfektionierten Vliesen oder Geweben zu bilden. Diese vorkonfektionierten Vliese oder Gewebe werden mit einer Überlappung an einer Nahtstelle zusammengelegt. Dadurch entsteht eine Unsymmetrie, die vor allem bei rotationssymmetrischen Kunststoffprofilen und solchen, bei denen es auf eine gute Maßhaltung ankommt, nachteilig ist. Außerdem lässt sich die Einbringung vorkonfektionierter Gewebe und Vliese nur mit großem Aufwand in den Herstellungsprozess des Kunststoffprofils integrieren.

Das Dokument D5 offenbart ein Verfahren zur Herstellung eines verstärkten Kunststoffprofils, wobei durch Ziehen in Zugrichtung mindestens eine Verstärkung, vorzugsweise eine Querverstärkung und gegebenenfalls eine Längsverstärkung, mit Kunststoff ummantelt wird bzw. werden.

Der Erfindung liegt die Aufgabe zugrunde, ein Verfahren zur Herstellung eines verstärkten Kunststoffprofils zu schaffen, das eine einfache Bildung der Verstärkung, insbesondere der Querverstärkung, und eine hohe Genauigkeit besonders rotationssymmetrischer Kunststoffprofile zulässt.

Ein Verfahren zur Lösung dieser Aufgabe weist die Maßnahmen des Anspruchs 1 auf. Es ist danach vorgesehen, die Verstärkung wenigstens zum Teil aus mindestens einer Reihe von Maschen, Schlaufen und/oder Schlingen aus mindestens einem Garn oder einem Faden zu bilden. Alternativ oder zusätzlich ist vorgesehen, die Verstärkung mindestens zum Teil aus Bindungen zu bilden, die durch Webtechnologien hergestellt worden sind. Bevorzugt wird so eine eine Längsverstärkung umgebende Querverstärkung hergestellt. Die Maschen, Schlingen, Schlaufen und/oder Bindungen bilden um die längslaufenden Verstärkungsstränge der Längsverstärkung eine homogene Querverstärkung, die dem Kunststoffprofil eine gute Festigkeit und gute Maßhaltigkeit gibt, insbesondere durch die mit Maschen, Schlingen, Bindungen bzw. Schlaufen erreichbare Gleichmäßigkeit der Querverstärkung das Kunststoffprofil eine hervorragende Symmetrie erhält.

Es ist bevorzugt vorgesehen, aus der mindestens einen Reihe von Maschen, Schlaufen, Schlingen, Bindungen oder dergleichen eine schlauchartige Umhüllung bzw. Ummantelung der Verstärkungsstränge zu erzeugen. Die schlauchartige Umhüllung bildet vor allem eine ganz besonders gleichmäßige Querverstärkung. Die schlauchartige Umhüllung zur Bildung der Querverstärkung ist bevorzugt stramm um die Längsverstärkung herum angeordnet; sie kann die Längsverstärkung aber auch lose umgeben oder als einzige Verstärkung vorgesehen sein.

Bei einem bevorzugten Verfahren ist vorgesehen, die schlauchartige Ummantelung oder Umhüllung aus mehreren Lagen jeweils einer Reihe von Maschen, Schlingen, Bindungen und/oder Schlaufen zu bilden, wobei die Maschen, Schlaufen, Bindungen bzw. Schlingen bevorzugt aus einem Garn oder Fäden des für die Längsverstärkung vorgesehenen Materials gebildet werden. Auf diese Weise lässt sich eine den Anforderungen gerecht werdende Verstärkung, insbesondere Querverstärkung, bilden, wobei die mehreren Lagen insgesamt eine ringsherum etwa gleich dicke schlauchartige Ummantelung bilden, wodurch auch bei mehrlagigen Querverstärkungen rotationssymmetrische Kunststoffprofile mit großer Präzision, insbesondere Rundheit, herstellbar sind.

Gemäß einer bevorzugten Weiterbildung des Verfahrens ist vorgesehen, die schlauchartige Ummantelung oder Umhüllung zur Bildung der Verstärkung, insbesondere der Querverstärkung, kontinuierlich während des Weitertransports der längsgerichteten Verstärkungsstränge in Zugrichtung herzustellen. Dadurch lässt sich die Bildung der Verstärkung sozusagen "in-line" in den Herstellungsprozess integrieren. Vorangehende Herstellungsstufen oder Zwischenstufen, wie sie bei einem bekannten Vorkonfektionieren von Geweben und Vliesen zur Bildung von Verstärkungen erforderlich sind, können so entfallen.

Die schlauchartige Umhüllung zur Bildung der Verstärkung, insbesondere der Querverstärkung, wird nach einem weiteren Vorschlag der Erfindung unter Verwendung von hin- und herbewegbaren Nadeln hergestellt. Bevorzugt werden die Maschen, Schlingen, Bindungen und/oder Schlaufen jeder Lage der schlauchartigen Umhüllung durch Stricken, insbesondere Rundstricken, Nähen, Ketteln oder Weben hergestellt. Bei dem genannten Verfahren lässt sich eine besondere gleichmäßige schlauchartige Umhüllung herstellen, und zwar mit Garnen und Fäden aus allen in Betracht kommenden Materialien. Vor allem lässt sich die schlauchartige Umhüllung durch Stricken, Ketteln, Nähen oder Weben einfach mit hin- und herbewegbaren Nadeln kontinuierlich herstellen, und zwar in einer der Produktionsgeschwindigkeit entsprechenden Ziehgeschwindigkeit.

Wird insbesondere die Querverstärkung durch Nähen oder Weben mit Kett- und Schutzfäden hergestellt, verlaufen die Kettfäden in Längsrichtung der Stränge der Längsverstärkung. In diesem Falle kann mindestens ein Teil der Kettfäden der Querverstärkung aus einigen oder allen Längssträngen der Längsverstärkung gebildet sein. Auch ist es möglich, die Kettfäden darstellenden Längsstränge der Längsverstärkung und die auch in Längsrichtung der Längsstränge der längs verlaufenden Kettfäden der Querverstärkung miteinander zu verweben, zu verflechten oder zu verschlingen, und zwar mindestens teilweise. Bei der zuvor geschilderten Ausgestaltung der Erfindung sind Teile der Längsverstärkung von der Querverstärkung gebildet oder umgekehrt. Die Längsverstärkung und die Querverstärkung hängen so zusammen zur Bildung einer einzigen Verstärkung.

Die Fäden oder Garne zur Herstellung der schlauchartigen Umhüllung der Verstärkung oder Querverstärkung sind vorzugsweise aus dem Material der in Ziehrichtung verlaufenden Verstärkungsstränge der Längsverstärkung gebildet. Hierbei kann es sich um Garne oder Fäden aus organischen und anorganischen Fasern handeln, also sowohl Naturfasern als auch Kunstfasern, beispielsweise Glasfasern oder Kohlefasern.

Es ist gemäß einer bevorzugten Ausgestaltung der Erfindung vorgesehen, die Garne bzw. Fäden zur Herstellung der schlauchartigen Ummantelung oder Umhüllung von Spulen oder Trommeln abzuziehen, wobei diese Spulen oder Trommeln vorzugsweise der zum Strangziehen dienenden Einrichtung ortsunveränderlich zugeordnet sind, und zwar an einer solchen Stelle, dass die Garne oder Fäden zur Herstellung der schlauchartigen Umhüllung den längslaufenden Verstärkungssträngen zugeführt und zur Ummantelung verstrickt, gekettelt oder verwoben werden, bevor auf die Verstärkungsstränge der Längsverstärkung und die schlauchartige Umhüllung der Querverstärkung das Kunststoffmaterial aufgebracht wird.

Das erfindungsgemäße Verfahren kommt bevorzugt zur Anwendung bei der Pultrusion von Kunststoffprofilen. Bei diesem speziellen Ziehverfahren lässt sich die Erfindung besonders vorteilhaft in den Fertigungsprozess integrieren, indem die gestrickte, gekettelte oder gewobene Umhüllung "in-line" bei der Pultrusion hergestellt wird.

Bevorzugte Ausführungsbeispiele der Erfindung werden nachfolgend anhand der Zeichnung näher erläutert. Hierin zeigen:
- Fig. 1: eine vereinfachte perspektivische Darstellung einer Pultrusionseinrichtung,
- Fig. 2: eine Draufsicht auf eine Einrichtung zur Herstellung einer Querverstärkung,
- Fig. 3: eine Schnitt-Darstellung eines Teils eines nach dem erfindungsgemäßen Verfahren hergestellten Kunststoffprofils mit der nur schematisch (symbolisch) dargestellten Querverstärkung, und
- Fig. 4: eine perspektivische Darstellung eines Teils einer gewebten Querverstärkung.

Bei der Erfindung geht es um die Herstellung eines stranggepressten Kunststoffprofils 10. Das gezeigte Ausführungsbeispiel bezieht sich auf die Herstellung des Kunststoffprofils 10 durch Pultrusion. Die Erfindung kann aber auch im Zusammenhang mit anderen Strangziehverfahren zur Herstellung des Kunststoffprofils 10 eingesetzt werden.

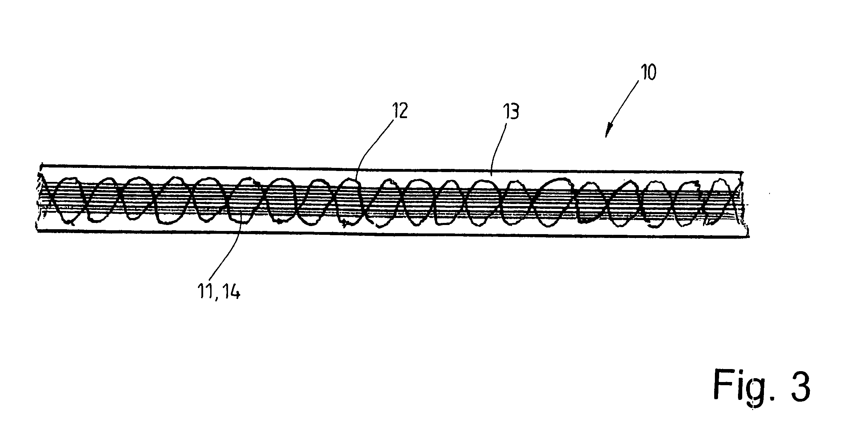

Das in der Fig. 3 gezeigte Kunststoffprofil 10 weist einen etwa ovalen Querschnitt auf. Bei dem erfindungsgemäßen Verfahren können aber auch Kunststoffprofile beliebiger anderer Querschnitte, und zwar sowohl rotationssymmetrische Querschnitte als auch asymmetrische Querschnitte, und zwar auch mit Hinterschneidungen, hergestellt werden.

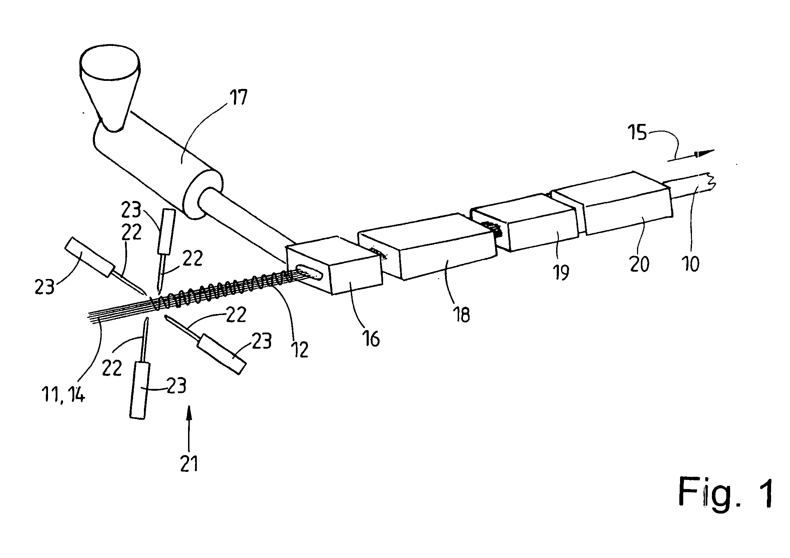

Das gezeigte Kunststoffprofil 10 weist eine Längsverstärkung 11 und eine Querverstärkung 12 auf. Die Querverstärkung ist in den Fig. 1 und 3 nur vereinfacht, nämlich andeutungsweise, dargestellt. Sowohl die Längsverstärkung 11 als auch die Querverstärkung 12 sind mindestens zum Teil, vorzugsweise vollständig mit Kunststoff getränkt und vollständig vom Kunststoff umgeben, wobei es sich vorzugsweise um einen duoplastischen Kunststoff 13 handelt. Die ein- oder mehrlagige Querverstärkung 12 umgibt die Längsverstärkung 11 schlauchartig, wobei vorzugsweise die Querverstärkung 12 die Längsverstärkung 11 stramm umgibt.

Die Längsverstärkung 11 ist gebildet aus einzelnen in Längsrichtung des Kunststoffprofils 10 durchgehend verlaufende Verstärkungsstränge 14. Verstärkungsstränge 14 können gegebenenfalls auch verflochten, versponnen oder sonst wie verbunden sein. Die Querverstärkung 12 ist gebildet aus Fasern oder Garnen, die in mindestens einer in Längsrichtung des Kunststoffprofils 10 verlaufenden Reihe von Maschen, Schlaufen und/oder Schlingen die Längsverstärkung 11 schlauchartig umgeben. Es ist denkbar, die Querverstärkung 12 aus mehreren Fäden oder Garnen zu bilden, wobei dann vorzugsweise die schlauchartige Querverstärkung 12 aus mehreren Lagen jeweils einer Reihe von Maschen, Schlaufen oder auch Schlingen bzw. Kombinationen von Maschen, Schlaufen und/oder Schlingen gebildet ist. Zusätzlich oder alternativ kann die Querverstärkung 12 auch aus Bindungen gebildet sein, die beispielsweise durch Webtechnologien erhalten wurden.

Möglich ist es auch, eine nur partielle Querverstärkung in besonders belasteten Bereichen des Kunststoffprofils vorzusehen. Solche partiellen Querverstärkungen umgeben die Längsverstärkung 11 nur teilweise, das heißt, sie bilden keine geschlossen schlauchartige Umhüllung der Längsverstärkung 11.

Die Garne bzw. Fäden der Querverstärkung 12 sind bevorzugt aus dem gleichem Material der Stränge der Längsverstärkung 11 gebildet. Es kann sich hierbei um Stränge aus einem Naturmaterial, beispielsweise Hanf bzw. Flachs oder auch einem künstlichen Material, beispielsweise Glas- oder Kohlefasern, handeln. Ebenso können die Fäden und Garne der Querverstärkung 12 aus Hanf, Flachs oder anderen natürlichen Materialien, aber auch aus Kunstfasern, beispielsweise Kohle- oder Glasfasern, gebildet sein. Denkbar ist es auch, die Stränge aus Fasern unterschiedlicher Materialien zu bilden, und zwar ebenso die Garne und Fäden. Auch können die Garne bzw. Fäden aus anderen Materialien gebildet sein als die Stränge der Längsverstärkung 11. Hinsichtlich der Materialien der Längsverstärkung 11 und der Querverstärkung 12 sind beim erfindungsgemäßen Verfahren insofern keine Grenzen gesetzt.

Die in der Fig. 1 gezeigte Pultrusionseinrichtung verfügt in Pultrusionsrichtung 15 gesehen über eine Tränkeform 16, der seitlich ein Extruder 17 zugeordnet ist, eine darauf folgende Tränkestrecke 18, eine dahinter angeordnete Form 19 und schließlich eine Kühlstrecke 20 am Ende. Vor der Tränkeform 16 befindet sich eine Einrichtung zur Herstellung der schlauchartig die Längsverstärkung 11 umgebenden Querverstärkung 12. Bei dieser Einrichtung handelt es sich im gezeigten Ausführungsbeispiel um eine Ketteleinrichtung 21. An der Stelle der Ketteleinrichtung 21 kann vor der Tränkeform 16 auch eine Strickeinrichtung, insbesondere eine Rundstrickeinrichtung, eine Näheinrichtung oder eine Webeinrichtung, angeordnet sein. Die einzelnen verbundenen oder unverbundenen Stränge der Längsverstärkung 11 verlaufen endlos durch die Ketteleinrichtung 21 und die anschließende Pultrusionseinrichtung, nämlich die Tränkeform 16, die Tränkestrecke 18, die Form 19 und die Kühlstrecke 20. Von der Ketteleinrichtung 21 wird die nahtlose, schlauchartige Umhüllung zur Bildung der Querverstärkung 12 um die Längsverstärkung 11 herum hergestellt, bevor die Längsverstärkung 11 und die Querverstärkung 12 mit Kunststoff getränkt werden. Demzufolge laufen die Längsverstärkung 11 und die darum vorzugsweise stramm angeordnete Querverstärkung 12 gemeinsam in Pultrusionsrichtung 15 durch die Tränkeform 16, wo vom Extruder 17 plastifizierter Kunststoff zugeführt wird und anschließend durch die Tränkestrecke 18, die Form 19 und die Kühlstrecke 20.

Die vor der Tränkeform 16 angeordnete Ketteleinrichtung 21 versieht die Längsverstärkung 11 kontinuierlich mit der Querverstärkung 12, wozu die Arbeitsgeschwindigkeit der Ketteleinrichtung 21 der Geschwindigkeit, mit der die Längsverstärkung 11 und die darum angebrachte Querverstärkung 12 in Pultrusionsrichtung 15 durch die Pultrusionseinrichtung hindurchgezogen werden, entspricht.

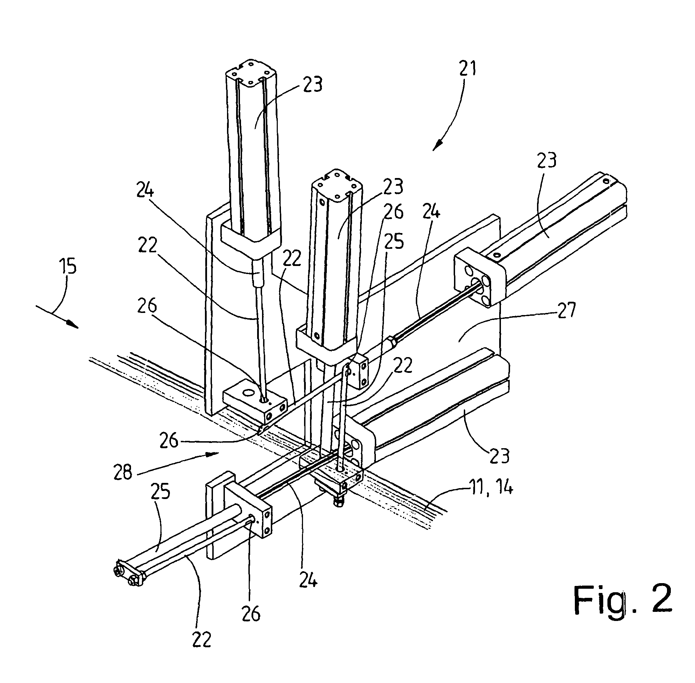

Die in den Fig. 1 und 2 gezeigte Ketteleinrichtung 21 dient zur Herstellung der Querverstärkung 12 aus mehreren Lagen. Die Ketteleinrichtung 21 verfügt über vier Nadeln 22, die jeweils ein Garn oder einen Faden mit einer in Pultrusionsrichtung 15 verlaufenden länglichen Reihe von Maschen bzw. Schlaufen versehen. Die Erfindung lässt sich aber auch mit einer größeren oder kleineren Anzahl von Nadeln 22 realisieren. Im gezeigten Ausführungsbeispiel sind alle Nadeln 22 schräg zur Pultrusionsrichtung 15 verlaufend angeordnet, und zwar so, dass sich auf jeder Seite neben der Längsverstärkung 11 eine Nadel 22 befindet. Die geraden Nadeln 22 sind auf einer geradlinigen Bahn auf- und ab- bzw. hin- und herbewegbar. Dabei bewegen sich alle Nadeln 22 seitlich an der Längsverstärkung 11 vorbei, ohne diese zu berühren. Die vier um die Längsverstärkung 11 herum angeordneten Nadeln 22 liegen in einer Ebene, die die Pultrusionsrichtung 15, also die Richtung der Längsverstärkung 11, senkrecht oder unter einem schrägen Winkel schneidet. Es ist aber auch denkbar, bei Bedarf die Nadeln 22 anders zu orientieren, um Querverstärkungen 12 mit einem anderen Maschen- bzw. Schlaufenbild herzustellen.

Jeder der allesamt gerade ausgebildeten Nadeln 22 ist ein Druckmittelzylinder 23 zugeordnet, bei dem es sich vorzugsweise um einen Pneumatikzylinder handelt. Von den Druckmittelzylindern 23 sind die geraden Nadeln 22 auf einer in Längsrichtung derselben verlaufenden geradlinigen Bahn quer zur Pultrusionsrichtung 15 bewegbar, und zwar von einer Seite des Bündels der Stränge der Längsverstärkung 11 zur gegenüberliegenden Seite.

Bei der in der Fig. 2 gezeigten Ketteleinrichtung 21, die vor der Tränekform 16 der Pultrusionseinrichtung angeordnet ist, sind alle Druckmittelzylinder 23 auf einer Seite der Längsverstärkung 11 angeordnet. Da die Nadeln 22 paarweise von gegenüberliegenden Seiten der Längsverstärkung 11 sich von einer Seite der Längsverstärkung 11 zur anderen bewegen, sind zwei Nadeln 22 umgekehrt gerichtet an einem Ende einer eine Kolbenstange 24 des betreffenden Druckmittelzylinders 23 verlängernden Distanzhülse 25 angeordnet. Die Spitzen 26 dieser zwei Nadeln 22 weisen dadurch zum Druckmittelzylinder 23, während die Spitzen 26 der beiden übrigen Nadeln die Kolbenstangen 24 der betreffenden Druckmittelzylinder 23 verlängernd von den Druckmittelzylindern 23 weggerichtet sind. Werden alle vier Druckmittelzylinder 23 ausgefahren, bewegen sich zwei Nadeln 22 von der einen Seite und zwei Nadeln 22 von der anderen Seite über oder unter der Längsverstärkung 11 hinweg.

Alle vier Druckmittelzylinder 23 mit den Nadeln 22 sind auf einer gemeinsamen ebenen Trägerplatte 27 befestigt. Die Trägerplatte 27 verfügt über einen seitlich offenen Ausschnitt 28. Durch diesen Ausschnitt 28 verlaufen die in Pultrusionsrichtung 15 weitertransportierten Längsstränge der Längsverstärkung 11. Die in der Fig. 2 gezeigte Ketteleinrichtung 21 ist der Pultrusionsrichtung 15 derart zugeordnet, dass die Ebene der Trägerplatte 27 die Pultrusionsrichtung 15 und damit die Längsverstärkung 11 senkrecht schneidet, wobei durch den Ausschnitt 28 in der Trägerplatte 27 die Längsverstärkung 11 in Pultrusionsrichtung 15 hindurchläuft.

### Das erfindungsgemäße Verfahren läuft wie folgt ab:

Bevor der eigentliche Pultrusionsvorgang stattfindet, also bevor die Verstärkung mit vorzugsweise duoplastischem Kunststoff getränkt und/oder ummantelt wird, wird um die in Pultrusionsrichtung 15 verlaufenden Stränge der Längsverstärkung 11 herum kontinuierlich die Querverstärkung 12 aus mindestens einer Reihe von Bindungen, Maschen, Schlingen bzw. Schlaufen hergestellt. Dazu werden die Stränge der Längsverstärkung 11 vor der Tränkeform 16 der Pultrusionseinrichtung von der Ketteleinrichtung 21 mit der nahtlosen schlauchförmigen Umhüllung zur Bildung der Querverstärkung 12 versehen. Im gezeigten Ausführungsbeispiel wird die schlauchförmige Umhüllung aus mehreren Fäden bzw. Garnen, nämlich vier Fäden oder Garnen, durch Ketteln gebildet. Dabei entsteht die die Längsverstärkung 11 umgebende gleichmäßige schlauchförmige Umhüllung der Querverstärkung 12, die im gezeigten Ausführungsbeispiel mit der vier Nadeln 22 aufweisenden Ketteleinrichtung 21 vierlagig ist. Die Querverstärkung 12 umgibt die Längsverstärkung 11 von außen, und zuwar stramm. Die Maschen bzw. Schlaufen verlaufen dabei im gezeigten Ausführungsbeispiel quer zur Längsrichtung der Stränge der Längsverstärkung 11.

Die Stränge der Längsverstärkung 11 werden kontinuierlich umkettelt, und zwar mit einer Vorschubgeschwindigkeit, die der Pultrusionsgeschwindigkeit entspricht. Das Ketteln erfolgt also mit anderen Worten mit der gleichen Geschwindigkeit, mit der die Stränge der Längsverstärkung 11 in Pultrusionsrichtung 15 durch die Pultrusionseinrichtung 15 hindurchgezogen werden.

Die von der nahtlosen schlauchartigen Querverstärkung 12 von außen umgebenden Stränge der Längsverstärkung 11 werden zusammen mit gleicher Geschwindigkeit kontinuierlich durch die Tränkeform 16 in Pultrusionsrichtung 15 hindurchbewegt. In der Tränkeform 16 wird vom Extruder 17 erzeugter flüssiger Kunststoff der Längsverstärkung 11 und der diese umgebenden Querverstärkung 12 zugeführt. Dabei kommt es zu einem Ummanteln und auch einem mindestens teilweisen Durchtränken der Stränge bzw. Fasern oder Garne der Längsverstärkung 11 und der Querverstärkung 12. Im Anschluss an die Tränkeform 16 werden die mit Kunststoff versehene Längsverstärkung 11 und Querverstärkung 12 in Pultrusionsrichtung 15 weiterbewegt durch die Tränkestrecke 18, die darauf folgende Form 19, in der das Kunststoffprofil 10 seine endgültige äußere Gestalt erhält und schließlich durch die Kühlstrecke 20. Am Ende der Kühlstrecke 20 verlässt die Pultrusionseinrichtung das fertige Kunststoffprofil 10 als endloser Strang. Von diesem Strang werden Kunststoffprofile 10 entsprechender Länge mittels einer nicht gezeigten Ablängeinrichtung abgetrennt.

Beim erfindungsgemäßen Verfahren kann die Querverstärkung 12, also die schlauchartige Umhüllung der Längsverstärkung 11, auch durch Stricken, insbesondere Rundstricken, Nähen oder Weben hergestellt werden. Dabei kann die schlauchförmige oder auch nur partielle Querverstärkung 12 wie auch beim Ketteln durch Verwendung einer entsprechenden Anzahl von Nadeln mehrlagig sein.

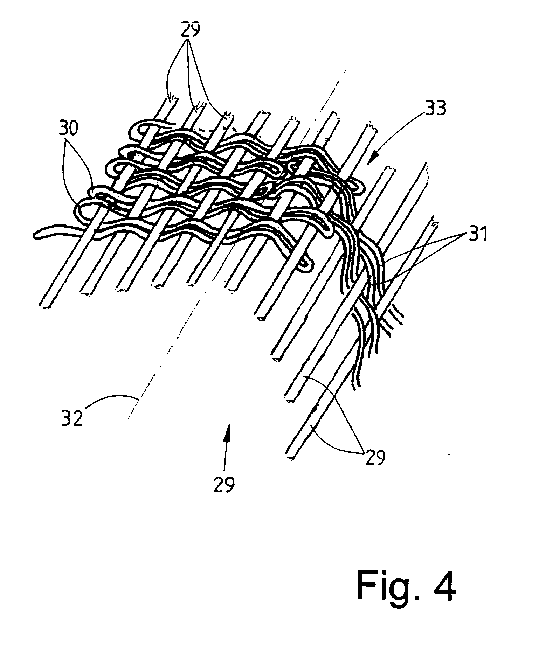

Die Fig. 4 zeigt perspektivisch einen Teil einer gewebten Querverstärkung 29. Die gewebte Querverstärkung 29 verfügt über Kettfäden 30 und Schussfäden 31. Die Kettfäden 30 verlaufen parallel zueinander längs der Pultrusionsrichtung 32. Demzufolge verlaufen die Schussfäden 31 quer zur Pultrusionsrichtung 32. Bei den Kettfäden 30 kann es sich um einen Teil oder alle Längsstränge der in der Figur nicht gezeigten Längsverstärkung handeln, die von der Querverstärkung 29 mindestens teilweise umschlossen ist. Es ist auch denkbar, die Kettfäden 30 der Querverstärkung 29 mit den parallel zu den Kettfäden 30 verlaufenden Längssträngen der Längsverstärkung zu verflechten, zu verschlingen oder zu verweben.

Die teilweise gezeigte Querverstärkung 29 verfügt über Kettfäden 30 in einer etwa horizontalen Ebene und Kettfäden 30 in einer etwa vertikalen Ebene. Die Schussfäden 31 treffen sich in der Ecke zwischen den horizontalen und vertikalen Kettfäden 30. Zur Bildung einer Eckverbindung der Schussfäden 31 wird der Kettfaden 30 der Ecke gemeinsam und abwechselnd genutzt von den endlosen Schussfäden 31. Dabei findet ein Umweben des eine Ecke bildenden Kettfadens 30 statt, was zu einer Eckverbindung 33 der Querverstärkung 29 führt.

Die in der Fig. 4 teilweise gezeigte gewebte Querverstärkung 29 wird wie zuvor beschrieben bei der Herstellung des Profils sozusagen "in-line" hergestellt, und zwar mit der Pultrusionsgeschwindigkeit des Kunststoffprofils. Die Kettfäden und die Schussfäden 31 werden von Vorratsspulen abgezogen, die feststehend, also ortsfest, der Pultrusionseinrichtung zugeordnet sind. Die Vorratsrollen sind lediglich um feststehende Drehachsen frei drehbar zum Abziehen der Kettfäden 30 und der Schussfäden 31.

Die zuvor beschriebenen Ausführungsbeispiele der Erfindung sind auf ein Kunststoffprofil mit mindestens einer Längsverstärkung 11 und mindestens einer dieser ganz oder teilweise umgebenden Querverstärkung 12 bzw. 29 bildet. Es ist aber auch denkbar, das Kunststoffprofil nur mit einer Verstärkung zu versehen, die aber vorzugsweise als eine Querverstärkung 12 bzw. 29 ausgebildet ist, so dass die Längsverstärkung 11 fehlt. Die einzige Verstärkung ist dann in erfindungsgemäßer Weise durch Stricken, insbesondere Rundstricken, Nähen, Ketteln oder Weben gebildet und verfügt mindestens über eine Reihe Bindungen, Maschen, Schlingen und/oder Schlaufen aus wenigstens einem Garn oder Faden.

### Bezugszeichenliste:

- 10: Kunststoffprofil
- 11: Längsverstärkung
- 12: Querverstärkung
- 13: Kunststoff
- 14: Verstärkungsstrang
- 15: Pultrusionsrichtung
- 16: Tränkeform
- 17: Extruder
- 18: Tränkestrecke
- 19: Form
- 20: Kühlstrecke
- 21: Ketteleinrichtung
- 22: Nadel
- 23: Druckmittelzylinder
- 24: Kolbenstange
- 25: Distanzhülse
- 26: Spitze
- 27: Trägerplatte
- 28: Ausschnitt
- 29: Querverstärkung
- 30: Kettfaden
- 31: Schussfaden
- 32: Pultrusionsrichtung
- 33: Eckverbindung

## Patentansprüche

1. Verfahren zur Herstellung eines verstärkten Kunststoffprofils (10), wobei durch Ziehen in Zugrichtung mindestens eine Verstärkung, vorzugsweise eine Querverstärkung (12) und ggf. eine Längsverstärkung (11), mit Kunststoff ummantelt wird bzw. werden, **dadurch gekennzeichnet, dass** die wenigstens eine Verstärkung ganz oder teilweise aus einer kontinuierlich während der Herstellung des Kunststoffprofils (10) gebildeten, schlauchartigen Umhüllung aus mindestens einer Reihe von Maschen, Schlingen und/oder Schlaufen aus wenigstens einem Gam oder Faden durch Stricken bzw. Ketteln oder durch Weben erzielte Bindungen mit hin- und herbewegbaren Nadeln (22) hergestellt wird.

2. Verfahren nach Anspruch 1, **dadurch gekennzeichnet, dass** die schlauchartige Umhüllung zur Bildung der Verstärkung aus mehreren Lagen aus Reihen von Maschen, Schlingen, Bindungen und/oder Schlaufen gebildet wird.

3. Verfahren nach Anspruch 1 oder 2, **dadurch gekennzeichnet, dass** während des Weitertransports der Verstärkung in Zugrichtung die schlauchartige Umhüllung kontinuierlich hergestellt wird.

4. Verfahren nach einem Ansprüche 1 bis 3, **dadurch gekennzeichnet, dass** die Garne bzw. Fäden zur Herstellung der Verstärkung bildenden textilartigen Umhüllung von Spulen oder Trommeln, vorzugsweise ortsfesten Trommeln oder Spulen, abgezogen werden.

5. Verfahren nach einem der vorhergehenden Ansprüche, **dadurch gekennzeichnet, dass** die Verstärkung mehrere Lagen aufweist, wobei ggf. jede Lage der die Verstärkung bildenden schlauchartigen Umhüllung von mindestens einer auf einer geradlinigen Bahn bewegbaren Nadel (22) hergestellt wird und/oder die oder jede Nadel (22) auf einer senkrecht und/oder schräg zur Zugrichtung verlaufenden geradlinigen Bahn bewegt wird, die sich vorzugsweise über, unter und/oder neben der Längsverstärkung (11) erstreckt und den Verlauf der Längsverstärkung (11) schneidet, ohne mit der Längsverstärkung (11) zu kollidieren.

6. Verfahren nach einem der vorhergehenden Ansprüche, **dadurch gekennzeichnet, dass** die wenigstens eine Verstärkung als Querverstärkung (12) ausgebildet wird.

7. Verfahren nach einem der vorhergehenden Ansprüche, **dadurch gekennzeichnet, dass** die Garne bzw. Fäden zur Bildung der Querverstärkung (12) von den Nadeln (22) von ortsfest zugeordneten Spulen oder dergleichen abgezogen werden.

8. Verfahren nach einem der vorhergehenden Ansprüche, **dadurch gekennzeichnet, dass** die Querverstärkung (12) die Längsverstärkung (11) umgibt, vorzugsweise die schlauchartige Umhüllung der Querverstärkung (12) stramm um die Längsverstärkung (11) herum hergestellt wird.

9. Verfahren nach Anspruch 8, **dadurch gekennzeichnet, dass** die Fäden bzw. Garne zur Herstellung der als schlauchartige Umhüllung der Längsverstärkung (11) ausgebildeten Querverstärkung (12) aus dem Material der Längsverstärkung (11) gebildet werden.

## Claims

1. A method of producing a reinforced plastic profile (10), with at least one reinforcement, preferably a transverse reinforcement (12) and, if applicable, a longitudinal reinforcement (11), being encased in plastic by drawing in a drawing direction, **characterized in that** the at least one reinforcement is formed entirely or partly from a tube-like covering formed continuously during the production of the plastic profile (10) and comprising at least one row of stitches and/or loops of at least one yarn or thread by means of knitting or linking or by weaves made with needles (22) that can be moved back and forth.

2. The method as claimed in claim 1, **characterized in that** the tube-like covering for forming the reinforcement is formed by a plurality of layers comprising rows of stitches, weaves and/or loops.

3. The method as claimed in claim 1 or 2, **characterized in that** the tube-like covering is produced continuously as the reinforcement (11) is being further transported in the drawing direction.

4. The method as claimed in claim 1 to 3, **characterized in that** the yarns or threads for producing the textile-like covering forming the reinforcement are drawn from reels or drums, preferably fixed-location drums or reels.

5. The method as claimed in one of the previous claims, **characterized in that** the reinforcement comprises a plurality of layers, with each layer of the tube-like covering forming the reinforcement being produced by at least one needle (22) which can move on a straight path and/or that the or each needle (22) is moved on a straight path which runs perpendicular and/or obliquely to the drawing direction, said path preferably extending above, below and/or or next to the longitudinal reinforcement (11) and intersecting the course of the longitudinal reinforcement (11) without colliding with the longitudinal reinforcement (11).

6. The method as claimed in one of the previous claims, **characterized in that** the at least one reinforcement is configured as a transverse reinforcement (12).

7. The method as claimed in one of the previous claims, **characterized in that** the yarns or threads for forming the transverse reinforcement (12) are drawn by the needles (22) from reels or the like assigned at a fixed location.

8. The method as claimed in one of the previous claims, **characterized in that** the transverse reinforcement (12) surrounds the longitudinal reinforcement (11), preferably with the tube-like covering of the transverse reinforcement (12) being produced tightly around the longitudinal reinforcement (11).

9. The method as claimed in claim 8, **characterized in that** the threads or yarns for producing the transverse reinforcement (12) formed as a tube-like covering of the longitudinal reinforcement (11) are formed from the material of the longitudinal reinforcement (11).

## Revendications

1. Procédé de fabrication d'un profilé en plastique renforcé (10), dans lequel, par étirement dans la direction de traction, au moins un renforcement, de préférence un renforcement transversal (12) et éventuellement un renforcement longitudinal (11), est ou sont enveloppés de plastique, **caractérisé en ce que** l'au moins un renforcement est fabriqué complètement ou en partie à partir d'une enveloppe de type tuyau formée en continu pendant la fabrication du profilé en plastique (10), constituée d'au moins une rangée de mailles, de lacs et/ou de boucles constitués d'au moins un fil ou filament par points produits par tricotage ou maillage ou par tissage avec des aiguilles animées d'un mouvement alternatif (22).

2. Procédé selon la revendication 1, **caractérisé en ce que** l'enveloppe de type tuyau est formée pour former le renforcement constitué de plusieurs couches de rangées de mailles, lacs, points et/ou boucles.

3. Procédé selon la revendication 1 ou 2, **caractérisé en ce que** l'enveloppe de type tuyau est fabriquée en continu pendant le transport ultérieur du renforcement dans la direction de traction.

4. Procédé selon l'une quelconque des revendications 1 à 3, **caractérisé en ce que** les fils ou les filaments sont tirés pour fabriquer l'enveloppe de type textile formant le renforcement enveloppant des bobines ou des tambours, de préférence des tambours ou des bobines fixes.

5. Procédé selon l'une quelconque des revendications précédentes, **caractérisé en ce que** le renforcement présente plusieurs couches, chaque couche de l'enveloppe de type tuyau formant le renforcement étant fabriquée éventuellement par au moins une aiguille (22) déplaçable sur une trajectoire rectiligne, et/ou la ou chaque aiguille (22) étant déplacée sur une trajectoire rectiligne perpendiculaire et/ou oblique par rapport à la direction de traction, qui s'étend de préférence sur, sous, et/ou à côté du renforcement longitudinal (11), et qui croise l'étendue du renforcement longitudinal (11), sans buter contre le renforcement longitudinal (11).

6. Procédé selon l'une quelconque des revendications précédentes, **caractérisé en ce que** l'au moins un renforcement est réalisé sous forme de renforcement transversal (12).

7. Procédé selon l'une quelconque des revendications précédentes, **caractérisé en ce que** les fils ou les filaments sont tirés pour former le renforcement transversal (12) par les aiguilles (22) des bobines ou similaires associées fixement.

8. Procédé selon l'une quelconque des revendications précédentes, **caractérisé en ce que** le renforcement transversal (12) entoure le renforcement longitudinal (11), de préférence l'enveloppe de type tuyau du renforcement transversal (12) est fabriquée sous forme tendue autour du renforcement longitudinal (11).

9. Procédé selon la revendication 8, **caractérisé en ce que** les fils ou les filaments pour fabriquer le renforcement transversal (12) réalisé en tant qu'enveloppe de type tuyau du renforcement longitudinal (11) sont formés à partir du matériau du renforcement longitudinal (11).
